# EUROPÄISCHE PATENTANMELDUNG

(11) **EP 1 746 066 A1**
(43) Veröffentlichungstag der Anmeldung: **24.01.2007**
(21) Anmeldenummer: 06013658.7
(22) Anmeldetag: 30.06.2006
(51) Int. Cl.: B66F 9/075, B66F 9/22, B60K 17/356

(54) **Flurförderfahrzeug**

(30) Priorität: 21.07.2005 DE 20511503 U
(71) Anmelder: Liebherr-Werk Nenzing GmbH, 6710 Nenzing (AT)
(72) Erfinder: Mietsching,Walter, 6708 Brand, Vorarlberg (AT); Krimbacher, Norbert, 6822 Satteines (AT)
(74) Vertreter: Laufhütte, Dieter

(57) **Zusammenfassung**

Die Erfindung betrifft ein lenkbares Flurförderfahrzeug (10) mit zumindest teilweise angetriebenen Rädern (12,14,16), wobei die angetriebenen Räder (12,14) mittels Einzelantrieben (22,24) antreibbar sind und ein Radquerkraftregler vorgesehen ist, der das Antriebsmoment der angetriebenen Räder (12,14) regelt. Um die aktuelle Radquerkraft zu ermitteln, wird der Lenkwinkel des lenkbaren Hinterrades (16) oder die Kraft innerhalb der Lenkachse gemessen.

## Beschreibung

Die Erfindung betrifft ein lenkbares Flurföderfahrzeug mit zumindest teilweise angetriebenen Rädern.

Bei Flurförderfahrzeugen werden üblicherweise die beiden ungelenkten Vorderräder angetrieben, während die nicht angetriebenen Hinterräder gelenkt werden. Diese technische Realisierung führt zu einer günstigen und robusten Bauweise. Als Antrieb werden bei derartigen Flurförderfahrzeugen beispielsweise hydrostatische Antriebe mit nachfolgendem Differentialgetriebe oder aber auch elektrische Antriebe eingesetzt.

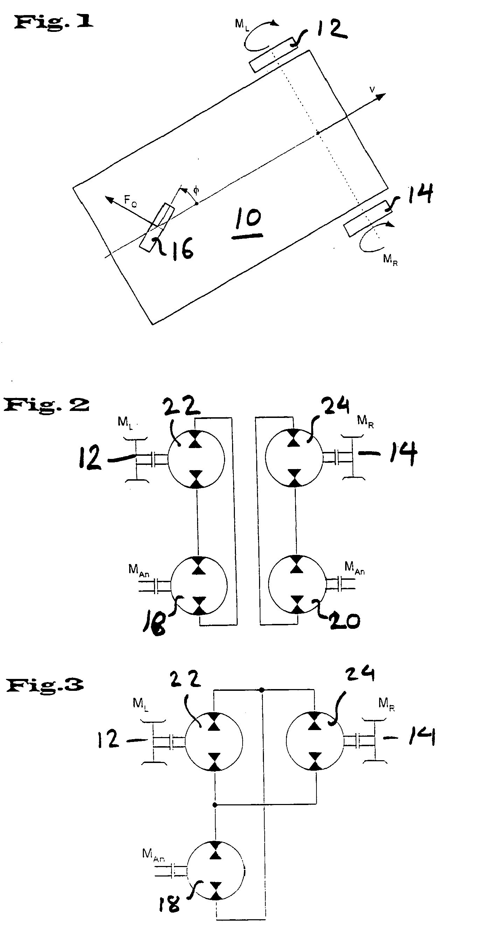

In der Figur 1 ist eine vereinfachte Skizze der Verhältnisse beim Antrieb eines Flurföderfahrzeugs der zuvor beschriebenen Bauweise gezeigt. Hier ist aus Vereinfachungsgründen das Flurföderfahrzeug 10 mit zwei nicht gelenkten angetriebenen Vorderrädern 12 und 14 und einem gelenkten nicht angetriebenen Hinterrad 16 versehen. Das angetriebene Rad 12 überträgt das Antriebsmoment M_{L}. Das angetriebene Vorderrad 14 erzeugt das Antriebsmoment M_{R}. Hierdurch wird das Fahrzeug in Fahrtrichtung mit der Geschwindigkeit v bewegt. Die Aufprägung des Lenkwinkels Φ erfolgt durch das gelenkte Rad 16. Da bei Flurförderfahrzeugen große Lenkwinkel Φ realisiert werden bzw. kleine Wenderadien erwünscht sind, treten bei den Kurvenfahrten hohe Querkräfte F_{Q} (vgl. Fig. 1) auf das lenkende Hinterrad 16 bzw. die lenkenden Hinterräder auf. Durch die Verwendung eines Differentialgetriebes ist es nicht möglicht, aktiv auf die vorhandenen Radquerkräfte des gelenkten Rades einzuwirken. Diese Querkraft F_{Q} wirkt sich störend bei feinen Positioniervorgängen aus, da sich das Fahrzeug in diesen Arbeitsbereichen durch die vorhandene Radquerkraft und aufgrund der endlichen Steifigkeit der Reifen quer zur Radachse nur unpräzise steuern lässt. Bei kleineren Reifendimensionierungen versucht man hier durch ein kompaktes und robustes Reifendesign diesen physikalischen Gegebenheiten entgegenzuwirken. Bei größerer Dimensionierung kann diese Problematik aber nicht mehr durch das Reifendesign abgefangen werden, da hier vergleichsmäßig höhere mechanische Beanspruchungen auftreten.

Aufgabe der vorliegenden Erfindung ist es daher, ein lenkbares Flurförderfahrzeug mit zumindest teilweise angetriebenen Rädern zu schaffen, das sich leicht und genau in eine gewünschte Ziel position lenken lässt.

Erfindungsgemäß wird diese Aufgabe durch die Kombination der Merkmale des Anspruchs 1 gelöst. Demnach wird ein lenkbares Flurförderfahrzeug mit zumindest teilweise angetriebenen Rädern geschaffen, wobei die angetriebenen Räder mittels Einzelantrieben antreibbar sind, wobei ein Radquerkraftregler vorgesehen ist, der das Antriebsmoment der jeweils angetriebenen Räder regelt. Durch den getrennten Antrieb der angetriebenen Räder können diese beliebig, je nach Fahrsituation, verändert und aktiv beeinflußt werden. Hierdurch kann eine aktive Lenkunterstützung durch die angetriebenen Räder und eine Stabilisierung des Fahrzeugs erreicht werden. Aufgrund der aktiven Lenkunterstützung wird außerdem noch die auftretende Radquerkraft, welche für sich ja auch einen großen Einfluß auf die Lebensdauer der Reifen hat, verringert, wodurch die Standzeit der Reifen wesentlich erhöht wird.

Unter der Stabilisierung des Flurförderfahrzeugs wird die regelungstechnische Erhöhung der Steifigkeit der Hinterachse bezüglich der Lenkung verstanden. Durch eine Minimierung der Querkräfte auf die gelenkten Räder werden die elastischen Verformungen der Reifen minimiert. Hierdurch können die Vorgaben des Fahrzeuglenkers unmittelbarer und genauer auf die Fahrbahn umgesetzt werden. Durch entsprechende Regelung der Einzelantriebe wird die Radquersteifigkeit verbessert.

Besondere Ausgestaltungen der Erfindung ergeben sich aus den sich an den Hauptanspruch anschließenden Unteransprüchen.

Demnach können die Vorderräder mittels Einzelantrieben angetrieben sein, während die nicht angetriebenen Hinterräder lenkbar sind.

Alternativ können aber auch alle Räder mittels Einzelantrieben angetrieben sein.

Die Einzelantriebe können gemäß einer bevorzugten Ausgestaltung der Erfindung Elektromotoren sein.

Eine andere Ausgestaltung der Erfindung schlägt vor, die Einzelantriebe als Hydraulikmotoren auszubilden.

Diese Hydraulikantriebe können in einem geschlossenen hydraulischen Kreis realisiert sein. Dabei können die Einzelantriebe getrennte hydraulische Kreise aufweisen. Andererseits können die Einzelantriebe zweier angetriebener Räder auch zwei gekoppelte Hydraulikmotoren mit einer gemeinsamen Pumpe aufweisen.

Vorteilhaft ist der Radquerkraftregler Teil eines Radquerkraftregelkreises zur Minimierung der Radquerbelastung.

Im Regelkreis kann die aktuelle Radquerkraft berücksichtigt werden, wobei diese aus Modellrechnungen basierend auf Meßwerten ermittelt wird. Als Meßwerte kommt hier beispielsweise der Lenkwinkel in Frage. Die Radquerkraft kann aber auch unmittelbar innerhalb der Lenkachse gemessen werden.

Weitere Merkmale, Einzelheiten und Vorteile der Erfindung ergeben sich aus den in der Zeichnung dargestellten Ausführungsbeispielen. Es zeigen:
- Fig. 1:: eine schematische Darstellung eines Flurförderfahrzeugs zur Erläuterung der hier auftretenden physikalischen Größen,
- Fig. 2:: eine schematische Darstellung eines hydraulischen Antriebskonzepts eines erfindungsgemäßen Flurförderfahrzeugs gemäß einer ersten Ausführungsvariante und
- Fig. 3:: ein schematisches hydraulisches Konzept für einen Antrieb eines Flurförderfahrzeugs gemäß einer zweiten Ausführungsvariante der vorliegenden Erfindung.

Ein Einzelradantrieb für die angetriebenen Räder 12 und 14 (vgl. Fig. 1) kann entsprechend der ersten Ausführungsvariante eines hydraulischen Konzepts gemäß Fig. 2 durch zwei komplett geschlossene hydraulische Kreise, wie sie hier dargestellt sind, verwirklicht werden. Bei diesem Konzept können vergleichsweise kleinere Pumpen 18 und 20 zum Antrieb der Hydraulikmotoren 22 und 24 verwendet werden. Die Hydraulikmotoren 22 und 24 werden im Zweiquadrantenbetrieb betrieben. Der volle notwendige Vierquadrantenbetrieb wird durch die Pumpen bewerkstelligt.

Im zweiten System entsprechend der Figur 3 werden die beiden Hydraulikmotoren 22 und 24 hydraulisch gekoppelt. In diesem System benötigt man nur eine ― jedoch größere ― Pumpe 18. Um die komplette Funktionalität zu erreichen, müssen die Motoren hierbei im Vierquadrantenbetrieb betrieben werden.

## Patentansprüche

1. Lenkbares Flurförderfahrzeug mit zumindest teilweise angetriebenen Rädern,
**dadurch gekennzeichnet,**
**daß** die angetriebenen Räder mittels Einzelantrieben antreibbar sind und daß ein Radquerkraftregler vorgesehen ist, der das Antriebsmoment der angetriebenen Räder regelt.

2. Flurförderfahrzeug nach Anspruch 1, **dadurch gekennzeichnet, daß** die Vorderräder mittels Einzelantrieben angetrieben sind und die nicht angetriebenen Hinterräder lenkbar sind.

3. Flurförderfahrzeug nach Anspruch 1, **dadurch gekennzeichnet, daß** alle Räder mittels Einzelantrieben angetrieben sind.

4. Flurförderfahrzeug nach einem der vorangehenden Ansprüche, **dadurch gekennzeichnet, daß** die Einzelantriebe Elektromotoren sind.

5. Flurförderfahrzeug nach einem der vorangehenden Ansprüche, **dadurch gekennzeichnet, daß** die Einzelantriebe Hydraulikmotoren sind.

6. Flurförderfahrzeug nach Anspruch 5, **dadurch gekennzeichnet, daß** die Hydraulikantriebe in einem geschlossenen hydraulischen Kreis realisiert sind.

7. Flurförderfahrzeug nach Anspruch 5 oder 6, **dadurch gekennzeichnet, daß** die Einzelantriebe getrennte hydraulische Kreise aufweisen.

8. Flurförderfahrzeug nach Anspruch 5 oder 6, **dadurch gekennzeichnet, daß** die Einzelantriebe zweier angetriebener Räder zwei gekoppelte Hydraulikmotoren mit einer gemeinsamen Pumpe aufweisen.

9. Flurförderfahrzeug nach einem der vorangehenden Ansprüche, **dadurch gekennzeichnet, daß** der Radquerkraftregler Teil eines Radquerkraftregelkreises zur Minimierung der Radquerbelastung ist.

10. Flurförderfahrzeug nach Anspruch 9, **dadurch gekennzeichnet, daß** im Regelkreis die aktuelle Radquerkraft berücksichtigbar ist, wobei diese aus Modellberechnungen basierend auf Meßwerten ermittelt wird.

11. Flurförderfahrzeug nach Anspruch 10, **dadurch gekennzeichnet, daß** als Meßwert der Lenkwinkel ermittelt wird.
